# EUROPÄISCHE PATENTSCHRIFT

(11) **EP 1 182 155 B1**
(45) Veröffentlichungstag und Bekanntmachung des Hinweises auf die Patenterteilung: **17.10.2007**
(21) Anmeldenummer: 01118484.3
(22) Anmeldetag: 01.08.2001
(51) Int. Cl.: B65G 69/28, B65G 69/00

(54) **Rammpuffer**
Schock buffer
Tampon de choc

(30) Priorität: 17.08.2000 DE 10040272
(43) Veröffentlichungstag der Anmeldung: 27.02.2002
(73) Patentinhaber: Zuccaro, Santo, 41812 Erkelenz (DE)
(72) Erfinder: Zuccaro, Santo, 41812 Erkelenz (DE)
(74) Vertreter: Hauck Patent- und Rechtsanwälte

(56) Entgegenhaltungen:
- EP-A- 0 888 986
- DE-U- 29 600 207
- FR-A- 2 686 913
- US-A- 5 658 633

## Beschreibung

Die vorliegende Erfindung betrifft einen Rammpuffer zur Anbringung an Verladerampen, Überladebrücken u.dgl. mit dem Merkmalen des Oberbegriffs von Patentanspruch 1.

Bei der Beladung oder Entladung von Lkw's an Laderampen, Überladebrücken u.dgl. besteht das Problem, daß der entsprechende Lkw möglichst nahe an die Kante der Verladerampe, Überladebrücke etc. heranfahren muß, ohne diese zu berühren. In der Praxis tritt jedoch immer wieder der Fall auf, daß der Lkw beim Rückwärtsfahren gegen die Verladerampe, Überladebrücke etc. stößt und diese beschädigt. Die dabei entstehenden Aufprallkräfte können zum Teil so groß sein, daß sie Stein- oder Betonbrocken vom Kantenbereich der Verladerampe lösen oder Überladebrücken durch die dann auf die Gelenke einwirkenden Stoßkräfte beträchtlich beschädigt werden. Auf diese Weise sind aufwendige Reparaturen erforderlich.

Um diesem Problem abzuhelfen, hat man sogenannte Rammpuffer angeordnet, die die vom Lkw beim Rückwärtsfahren ausgeübten Stoßkräfte aufnehmen und vernichten sollen. Es ist bekannt, derartige Rammpuffer als Gummielemente auszubilden, die beispielsweise an der Vorderseite der Rampe verschraubt werden. Auch Holzbalken sind bereits für diesen Zweck eingesetzt worden. Eine weitere bekannte Lösung dieses Problems besteht darin, etwa U-förmige Federstahlprofile anzubringen, die die entsprechenden Stoßkräfte vernichten.

Gummipuffer haben jedoch den Nachteil, daß sie nicht besonders haltbar sind. Bei der Aufbringung von großen Kräften besteht die Gefahr, daß die Gummipuffer platzen, reißen oder völlig zerfetzt werden, so daß sie ihre Dämpfungswirkung nicht mehr ausüben können. In einem solchen Fall besteht dann erneut die Gefahr, daß der Lkw die Verladerampe oder Überladebrücke selbst kontaktiert und diese beschädigt. Gleiches trifft für Holzbalken etc. zu, die ebenfalls keine großen Kräfte aufnehmen können und darüber hinaus unzureichende Dämpfungseigenschaften besitzen. Die Anordnung von Stahlblattfedern ist relativ kostspielig.

Aus der US-A-5 658 633 ist ein Rammpuffer zur Anbringung an Verladerampen, Überladebrücken u. dgl. bekannt, der die Merkmale des Oberbegriffs von Patentanspruch 1 aufweist. Bei diesem bekannten Rammpuffer wirken zwei einseitig offene Kästen miteinander zusammen, deren Inneres mit elastischem Material gefüllt ist. Bei einer Ausführungsform verhindern zwei übereinander angeordnete Querstreben, die sich in Langlöchern über eine begrenzte Strecke bewegen können, ein Herabfallen des die Stoßbelastung aufnehmenden Teiles des Rammpuffers. Bei einer anderen Ausführungsform wird das Herabfallen durch seitliche vertikale Lippen an den Kästen verhindert, die miteinander zusammenwirken.

Der vorliegenden Erfindung liegt die Aufgabe zugrunde, einen Rammpuffer zu schaffen, der bei einfacher Ausgestaltung und kostengünstiger Herstellung einen besonders sicheren Schutz gegen auftreffende Kräfte bietet.

Diese Aufgabe wird erfindungsgemäß bei einem Rammpuffer der angegebenen Art durch das kennzeichnende Merkmal von Patentanspruch 1 gelöst.

Erfindungsgemäß ist das andere die Stoßbelastung aufnehmende Teil relativ zum stationär anordbaren Teil auf- und abbeweglich angeordnet. Dies macht es möglich, die Höhe des Rammpuffers, der an einer Verladerampe etc. befestigt ist, an die Höhe eines LKW etc. anzupassen. Mit anderen Worten, übersteigt beispielsweise die Höhe des abzupuffernden Teiles eines LKW u. dgl. die Höhe der Verladerampe und damit die Höhe des daran montierten und mit der Verladefläche bündig abschließenden Rammpuffers, kann durch Aufwärtsbewegen des auf- und abbeweglich angeordneten Teiles relativ zum stationär anordbaren Teil die Pufferhöhe vergrößert und an die Höhe des puffernden Teiles angepasst werden.

Der erfindungsgemäß ausgebildete Rammpuffer setzt sich aus drei Teilen zusammen, nämlich zwei relativ zueinander bewegbaren Außenteilen aus hartem stoßfesten Material und einem Innenteil (Kern) aus elastisch verformbarem Dämpfungsmaterial. Als Material für die beiden Außenteile findet vorzugsweise Stahl Verwendung. Eines der Außenteile, vorzugsweise das C-profilförmig ausgebildete Teil, wird bei Inbetriebnahme des Rammpuffers an der Verladerampe, der Überladebrücke etc. montiert. Das andere Außenteil, vorzugsweise das hutprofilförmige Teil, ist relativ zu dem fest angebrachten Teil beweglich. Stößt beispielsweise ein Lkw beim Zurücksetzen gegen das aus dem C-profilförmigen Teil herausragende hutprofilförmige Teil, so wird das hutprofilförmige Teil in das C-profilförmige Teil hineinbewegt und preßt dabei das Innenteil (Kern) aus elastisch verformbarem Material, vorzugsweise Gummi, zusammen. Auf diese Weise werden die aufgebrachten Stoßkräfte vernichtet bzw. zumindest gedämpft.

Da die gesamte Außenhülle des erfindungsgemäß ausgebildeten Rammpuffers aus dem harten stoßfesten Material besteht, besteht nicht die Gefahr, daß der Rammpuffer durch die aufgebrachten Stoßkräfte, insbesondere dann, wenn ein Lkw beim Zurücksetzen mit noch relativ hoher Geschwindigkeit auf den Rammpuffer trifft, beschädigt wird. Der erfindungsgemäß ausgebildete Rammpuffer hat somit eine wesentlich längere nutzbare Lebensdauer als vergleichbare Rammpuffer aus Gummi oder anderem elastischen Material. Eine Beschädigung der Verladerampe, Überladebrücke etc. kann daher mit großer Sicherheit verhindert werden. Eine mögliche Beschädigung des mit dem Rammpuffer in Kontakt tretenden Fahrzeuges, falls überhaupt eine solche auftreten sollte, wird in Kauf genommen, da es der Fahrer des Fahrzeuges selbst in der Hand hat, ob er die Verladerampe etc. korrekt anfährt, während der Eigentümer der Rampe diesen Vorgang nicht steuern kann. Der erfindungsgemäß ausgebildete Rammpuffer stellt daher für den Eigentümer der stationären Verladeeinrichtung eine besonders große Hilfe dar.

Bei stationär angeordneten C-profilförmigen Teil liegen im montierten Normalzustand des erfindungsgemäß ausgebildeten Rammpuffers die Seitenflansche des hutprofilförmigen zweiten Teiles innen an den Seitenflanschen des C-profilförmigen ersten Teiles an. Das innen vorgesehene Dämpfungskissen füllt dabei im wesentlichen den gesamten Raum innerhalb des ersten und zweiten Teiles aus. Wird das hutprofilförmige zweite Teil durch Aufbringung einer Stoßbelastung auf dessen Basisflansch in das C-profilförmige erste Teil hineinbewegt, bewegen sich die Seitenflansche des zweiten Teiles von den Seitenflanschen des ersten Teiles weg. Die Seitenflansche des zweiten Teiles sowie dessen Basisflansch treffen dabei auf das Dämpfungskissen (Kern), das auf diese Weise zusammengepreßt wird und dadurch die Einwärtsbewegung des zweiten Teiles verzögert und zum Stillstand bringt. Auf diese Weise wird die aufgebrachte kinetische Energie vernichtet. Die Seitenflansche des zweiten Teiles erstrecken sich dabei vorzugsweise bis gegen die Innenseiten der Stege des ersten Teiles und werden durch diese Stege bei der Einwärtsbewegung des zweiten Teiles geführt, so daß ein Verkanten des zweiten Teiles bei Stoßbelastung weitgehend ausgeschaltet wird.

Wie erwähnt, ist das bevorzugte Material für die beiden Außenteile Stahl. Es kann jedoch beispielsweise auch ein geeigneter harter und stoßfester Kunststoff Verwendung finden. Das bevorzugte Material für das Dämpfungskissen (Kern) ist Gummi, wobei auch hier geeignete elastisch verformbare Kunststoffe Verwendung finden können.

Es wird davon ausgegangen, daß insgesamt zwischen den Außenteilen und dem Dämpfungskissen in Stoßrichtung etwa 2 mm Spiel vorhanden sind.

Vorzugsweise besteht das Dämpfungskissen (der Kern) aus zwei voneinander getrennten Elementen, von denen eines das erste Teil und das andere das zweite Teil im wesentlichen ausfüllt. Diese Ausführungsform hat den Vorteil einer einfachen Herstellbarkeit des Dämpfungskissens, da dieses bei dieser Ausführungsform aus zwei im Horizontalschnitt rechteckigen Elementen bestehen kann, während bei einer einstückigen Ausbildung des Kissens eine spezielle Form aus zwei miteinander verbundenen Rechtecken hergestellt werden muß. Im Horizontalschnitt rechteckförmige Gummiteile sind ohne weiteres im Handel erhältlich.

Vorstehend wurde eine Ausführungsform beschrieben, bei der das C-profilförmige erste Teil stationär angeordnet wird, während das zweite hutprofilförmige Teil hierzu beweglich ist. Die Stoßbelastung wird dabei vom zweiten Teil aufgenommen. Natürlich liegt auch die umgekehrte Lösung vollständig im Rahmen der Erfindung, daß nämlich das hutprofilförmig ausgebildete zweite Teil stationär angebracht wird, während das C-profilförmige erste Teil hierzu beweglich ist und die zu dämpfende Stoßbelastung aufnimmt.

Vorzugsweise ist das C-profilförmige erste Teil am unteren Ende geschlossen. Auf diese Weise wird verhindert, daß das in das erste Profil hineinragende zweite hutprofilförmige Teil sowie das Dämpfungskissen aus dem ersten Teil nach unten herausfallen.

Bei einer weiteren bevorzugten Ausführungsform weist das zweite hutprofilförmige Teil eine sich über das erste C-profilförmige Teil erstreckende Deckplatte auf. Diese Deckplatte bildet einen Schutz für das Dämpfungskissen und einen weiteren Anschlag für das zweite Teil. Die Deckplatte ist normalerweise rechtwinklig zur Achse des zweiten Teiles ausgebildet. Bei einer speziellen Ausführungsform der Erfindung erstreckt sie sich jedoch mit seitlichen Abstützungen schräg aufwärts und bildet auf diese Weise eine Auflauffläche für Fahrzeugteile, die mit vorstehenden Teilen den Rammpuffer überfahren. Durch die schräg aufwärts verlaufende Deckplatte (in Stoßrichtung schräg aufwärts) wird das vorstehende Fahrzeugteil schräg aufwärts geführt und rutscht, wenn das Fahrzeug zum Stillstand gekommen ist, wieder an der Schrägfläche nach unten.

Zur Anbringung des Rammpuffers an einer Verladerampe, Überladebrücke u.dgl. ist vorzugsweise das C-profilförmige erste Teil mit Befestigungsmitteln versehen, bei denen es sich beispielsweise um Befestigungsflansche etc. handeln kann. Die Befestigung erfolgt vorzugsweise mittels Schraubverbindungen, Schweißverbindungen.

Wenn das Dämpfungskissen (der Kern) in zwei Elemente aufgeteilt ist, erstreckt sich vorzugsweise das im zweiten Teil angeordnete Dämpfungselement etwas in das erste Teil hinein, so daß es nicht nach unten aus dem zweiten Teil herausfallen kann.

Die Befestigung des erfindungsgemäßen Rammpuffers erfolgt in der Regel an einer vertikalen Wand einer Verladerampe oder einer Überladebrücke. Der Rammpuffer kann jedoch auch so befestigt werden (beispielsweise an einer Verladerampe), daß er sich über deren Kante nach oben hinaus erstreckt. In diesem Fall muß der obere Teil des Rammpuffers rückwärtig abgestützt werden. Die Erfindung schlägt hierzu vor, daß der Rammpuffer auf der Rückseite des ersten Teiles mindestens einen Stützsteg und eine mit diesem verbundene Horizontalplatte zur Anbringung auf der Oberseite einer Rampe u.dgl. aufweist. Der Stützsteg erstreckt sich dabei vom oberen Ende des Rammpuffers schräg nach hinten und unten und endet in der Horizontalplatte, die dann an der horizontalen Rampenfläche befestigt werden kann. Der untere Teil des Rammpuffers, der an der vertikalen Fläche der Rampe anliegt, wird an dieser Fläche befestigt. Zweckmäßigerweise sind zwei Stützstege vorgesehen, die den Basisflansch des C-profilförmigen ersten Teiles beidseitig abstützen.

Es versteht sich, daß der erfindungsgemäß ausgebildete Rammpuffer auch an anderen Einrichtungen als Verladerampen, Überladebrücken angebracht werden kann, und zwar überall dort, wo auftretende Stoßkräfte gedämpft bzw. vernichtet werden müssen, um Beschädigungen an Einrichtungen zu verhindern.

Vorzugsweise ist das auf-und abbeweglich angeordnete Teil auf der gewünschten Höhe fixierbar, beispielsweise über eine geeignete Verriegelungseinrichtung, und kann, nachdem es seine Pufferfunktion erfüllt hat, nachdem beispielsweise der Lkw den Rammpuffer kontaktiert hat, durch Lösen der Verriegelungseinrichtung wieder in seine Ausgangsstellung innerhalb des stationären Teiles zurückbewegt werden, so daß der Verladevorgang durch das aufwärts bewegte Teil nicht gestört wird.

Eine besonders bevorzugte Ausführungsform sieht vor, daß der Rammpuffer eine das zweite hutprofilförmige Teil aus dem ersten C-profilförmigen Teil eine vorgegebene Strecke nach oben herausdrückende elastische Einrichtung aufweist. Bei dieser elastischen Einrichtung kann es sich beispielsweise um eine Gasfeder handeln. Die elastische Einrichtung drückt das zweite hutprofilförmige Teil aus dem ersten C-profilförmigen Teil nach oben heraus, beispielsweise um eine Strecke von 300 mm, und hält das zweite hutprofilförmige Teil auf dieser Höhe. In dieser Stellung kann das zweite hutprofilförmige Teil auch zusätzlich verriegelt werden. Nachdem das Teil seine Pufferfunktion erfüllt hat, wird es, ggf. nach Lösen der Verriegelung, gegen die elastische Einrichtung wieder nach unten in das C-profilförmige Teil hineingedrückt, wo es beispielsweise über eine geeignete Verriegelungseinrichtung fixiert werden kann. In diesem Zustand behindert das hutprofilförmige Teil nicht mehr den Be- bzw. Entladevorgang. Ist der Be- bzw. Entladevorgang beendet, kann die Verriegelung gelöst werden, so daß die elastische Einrichtung das zweite hutprofilförmige Teil wieder nach oben in die über die Verladerampe hinaus vorstehende Stellung drücken kann.

Der Rammpuffer weist daher vorzugsweise eine das zweite hutprofilförmige Teil in dessen Ausgangsstellung innerhalb des ersten C-profilförmigen Teiles fixierende lösbare Verriegelungseinrichtung auf, bei der es sich beispielsweise um einen federvorgespannten Haken handeln kann, der per Fußdruck aus seiner Verriegelungsstellung gelöst werden kann.

Die Erfindung wird nachfolgend anhand von Ausführungsbeispielen in Verbindung mit der Zeichnung im einzelnen erläu-tert. Es zeigen:
- Figur 1: eine räumliche Darstellung einer ersten Ausführungsform eines an einer Rampe befestigten Rammpuffers;
- Figur 2: eine Draufsicht auf den Rammpuffer der Figur 1 ;
- Figur 3: einen Horizontalschnitt durch den Rammpuffer der Figur 1;
- Figur 4: eine räumliche Ansicht einer weiteren Ausführungsform eines an einer Verladerampe befestigten Rammpuffers;
- Figur 5: einen schematischen Vertikalschnitt durch eine dritte Ausführungsform eines an einer Rampe befestigten Rammpuffers in der Ausgangsstellung des zweiten hutprofilförmigen Teiles; und
- Figur 6: einen Vertikalschnitt entsprechend Figur 5, in dem das zweite hutprofilförmige Teil in der zweiten ausgefahrenen Stellung dargestellt ist.

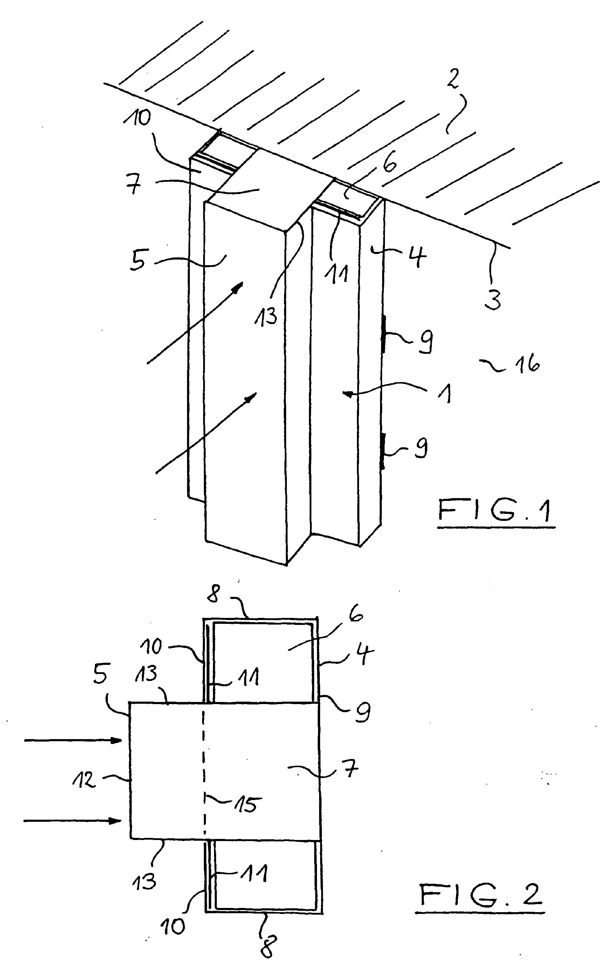

Der in Figur 1 dargestellte Rammpuffer 1 ist an der Vertikalwand 16 einer Verladerampe befestigt, die eine horizontal verlaufende Verladefläche 2 und eine Vorderkante 3 zwischen Horizontalfläche 2 und der Vertikalfläche der Wand 16 besitzt. Der Rammpuffer 1 schließt mit seinem oberen Ende etwa bündig mit der Horizontalfläche 2 der Rampe ab.

Die in Figur 1 dargestellten Pfeile deuten die Richtung an, in der beispielsweise ein Lkw sich rückwärts gegen die Verladerampe bewegt, um seine Ladefläche möglichst nah an die Verladefläche 2 zu bringen. Der Rammpuffer 1 ist vorgesehen, damit das Fahrzeug nicht direkt gegen die Rampe prallt und diese beschädigt. In der Regel sind mehrere Rammpuffer 1 entlang der Rampe vorgesehen.

Die Befestigung des Rammpuffers 1 an der Vertikalwand 16 der Rampe ist durch Schweißen erfolgt, wie bei 9 schematisch dargestellt.

Der hier dargestellte Rammpuffer 1 besteht aus vier Teilen, einem ersten C-profilförmigen Teil 4 aus Stahl, einem zweiten hutprofilförmigen Teil 5 aus Stahl, dessen Seitenflansche 11 im ersten Teil 4 benachbart und relativ beweglich zu dessen Seitenflanschen 10 angeordnet sind und dessen Stege 13 sich aus dem ersten Teil 4 heraus erstrecken, und einem innerhalb der beiden Teile 4, 5 angeordneten Dämpfungskissen (Kern), das aus elastisch verformbarem Dämpfungsmaterial, nämlich Gummi, besteht und aus zwei voneinander getrennten Elementen 6, 14 zusammengesetzt ist, von denen eines 6 das erste Teil 4 und das andere 14 das zweite Teil 5 im wesentlichen ausfüllt. In Figur 1 ist nur das eine Dämpfungselement 6 zu erkennen, während das andere Dämpfungselement von einer Deckplatte 7 des zweiten Teiles 5 abgedeckt ist. Diese Deckplatte 7 bildet einen gewissen Schutz für die Dämpfungselemente gegen Beanspruchungen von oben.

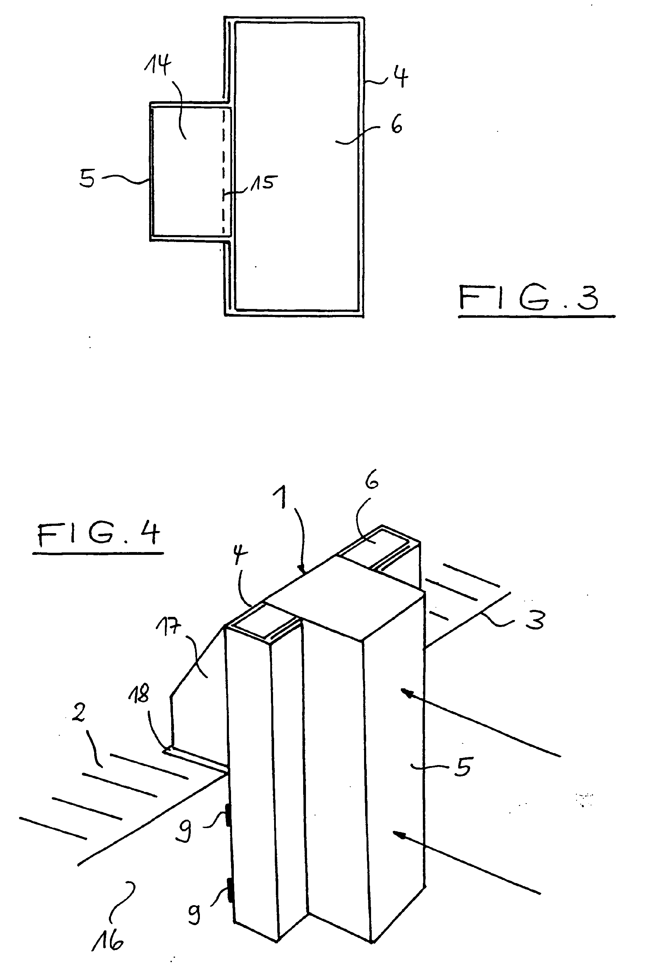

Die Figuren 2 und 3 in der Draufsicht und im Horizontalschnitt zeigen den exakten Aufbau des Rammpuffers 1. Das erste C-profilförmige Teil 4 besitzt einen Basisflansch 9, zwei hiervon ausgehende Stege 8 und zwei von den Stegen ausgehende, parallel zum Basisflansch 9 verlaufende Seitenflansche 10. Das erste Teil 4 ist am unteren Ende durch eine bei 15 angeordnete Bodenplatte geschlossen. Das zweite hutprofilförmige Teil 5 hat ebenfalls einen Basisflansch 12, zwei hiervon ausgehende Stege 13 und zwei von den Stegen 13 ausgehende Seitenflansche 11, die innerhalb des ersten Teiles 4 angeordnet sind und parallel sowie benachbart zu den Seitenflanschen 10 des ersten Teiles 4 verlaufen. Da das erste Teil 4 an der Rampe befestigt ist, kann sich das zweite Teil 5 relativ zum ersten Teil bewegen. Die entsprechende Belastungsrichtung, die zu einer Bewegung des zweiten Teiles 5 führt, ist in Figur 2 durch Pfeile angedeutet. Am oberen Ende weist das zweite Teil 5 eine Deckplatte 7 auf, die sich in Verlängerung der Stege 13 bis über den Basisflansch 9 des ersten Teiles 4 in Horizontalrichtung erstreckt.

Die beiden Dämpfungselemente 6, 14, die insbesondere in Figur 3 zu erkennen sind, füllen den von beiden Teilen 4, 5 gebildeten Innenraum im wesentlichen vollständig aus. In Belastungsrichtung verbleibt zwischen den Teilen 4, 5 und den Dämpfungselementen 6, 14 etwa ein Spiel von 2 mm.

Der hier dargestellte Rammpuffer 1 funktioniert derart, daß bei einer in Richtung der Pfeile in den Figuren 1 und 2 aufgebrachten Stoßkraft das zweite bewegliche Teil 5 in das erste stationäre Teil 4 hinein bewegt wird und dabei mit seinen Seitenflanschen 10 und seinem Basisflansch 12 gegen die Dämpfungselemente 6, 14 gepreßt wird. Die aus Gummi bestehenden Dämpfungselemente werden zusammengepreßt und dämpfen die Einwärtsbewegung des Teiles 5 und bringen dieses letztendlich zum Stillstand. Bei Entlastung von der aufgebrachten Kraft nehmen die Dämpfungselemente ihre ursprüngliche Form wieder an.

Figur 4 zeigt eine weitere Ausführungsform eines Rammpuffers. In dieser Figur finden gleiche Bezugszeichen zur Bezeichnung von gleichen oder entsprechenden Teilen wie bei der vorstehend beschriebenen Ausführungsform Verwendung. Der in Figur 4 dargestellte Rammpuffer 1 untescheidet sich von dem der Figuren 1 bis 3 lediglich dadurch, daß er auf seiner Rückseite, d.h. am Basisflansch 9 des C-profilförmigen Teiles 4, zwei sich nach hinten erstreckende Stützstege 17 aufweist, die sich im wesentlichen schräg nach unten und hinten erstrecken und in Horizontalplatten 18 enden, welche zur Befestigung des Rammpuffers 1 auf der horizontalen Verladefläche 2 der Verladerampe dienen. Dieser Rammpuffer, der sich im montierten Zustand nach oben über die Verladefläche 2 hinaus erstreckt, ist somit sowohl an der Vertikalwand 16 der Verladerampe befestigt, wie bei 9 gezeigt, als auch an der horizontalen Verladefläche 2 mit Hilfe der Platten 18. Die Befestigung kann über entsprechende Schweißverbindungen erfolgen. Die Stützstege 16 stützen den Rammpuffer 1 im oberen Bereich gegen dort aufgebrachte Stoßkräfte ab.

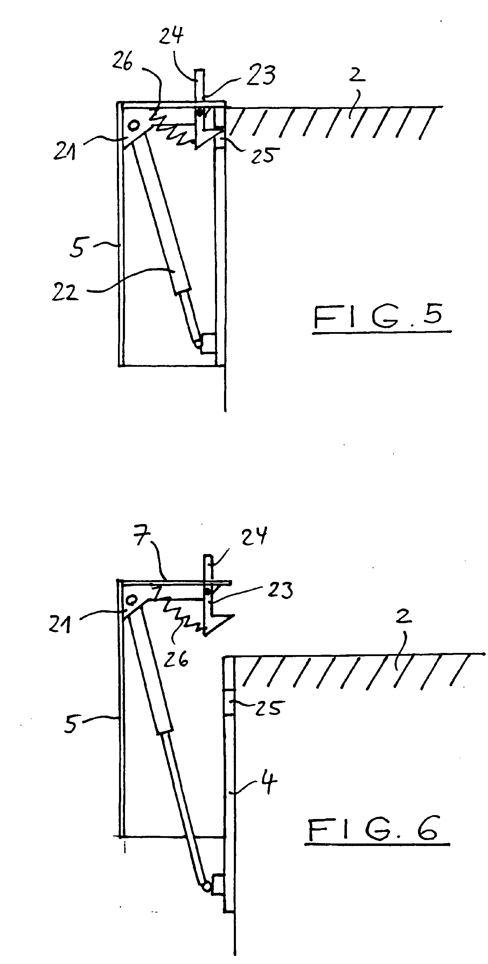

Die Figuren 5 und 6 zeigen eine dritte Ausführungsform eines Rammpuffers im schematischen Vertikalschnitt. Der Rammpuffer ist im an einer Verladerampe 2 befestigten Zustand dargestellt, wobei die Deckplatte des zweiten hutprofilförmigen Teiles 5 etwa mit der Oberseite der Verladerampe 2 bündig abschließt. Bei dieser Ausführungsform ist das zweite hutprofilförmige Teil 5 relativ zum ersten C-profilförmigen Teil 4 auf- und abweglich angeordnet. Hierzu ist im Inneren der beiden Teile etwa mittig eine elastische Einrichtung in Form einer Gasfeder 22 vorgesehen, die mit ihrem unteren Ende gelenkig an der Innenseite des Flansches des ersten Teiles 4 befestigt ist. Mit ihrem oberen Ende ist die Gasfeder 22 gelenkig im oberen Bereich des zweiten Teiles 5 befestigt, und zwar über eine Hilfskonstruktion 21, die aus zwei Seitenblechen besteht, die über eine Stange miteinander verbunden sind, an der das obere Ende der Gasfeder 22 gelenkig gelagert ist.

Durch die Anordnung der Gasfeder 22 ist das eine Element 6 des Kernes, das das erste Teil 4 im wesentlichen ausfüllt, mit einer entsprechenden Ausnehmung für die Gasfeder versehen. Das zweite Element 14 des Kernes, das das zweite Teil 5 im wesentlichen ausfüllt, ist zweigeteilt ausgebildet, wobei die Gasfeder dazwischen angeordnet ist. Beide Teile sind in den Figuren 5 und 6 nicht dargestellt.

Der Rammpuffer dieser Ausführungsform weist ferner eine Verriegelungseinrichtung 23 auf, die aus einem Haken 24, einem Langloch 25 und einer Druckfeder 26 besteht. Der Haken 24 greift im verriegelten Zustand in das Langloch 25, das am ersten Teil 4 angeordnet ist, ein und wird in diesem Zustand durch die Druckfeder 26 gehalten. Der Haken ist schwenkbar im Bereich der Deckplatte 7 des zweiten Teiles 5 angebracht. Er steht nach oben über die Deckplatte vor und kann durch Fußdruck gegen die Kraft der Druckfeder 26 verschwenkt werden, so daß er sich aus dem Langloch 25 löst. In diesem Fall bewegt die unter Vorspannung stehende Gasfeder 22 das zweite Teil 5 relativ zum ersten Teil 4 nach oben bis in die in Figur 6 gezeigte Endstellung. In dieser Stellung kann der Rammpuffer nunmehr seine Pufferfunktion ausüben. Zum Beladen oder Entladen wird das zweite Teil 5 wieder nach unten gedrückt, bis der Haken 24 wieder in das Langloch 25 eingreift und somit das zweite Teil 5 wieder am ersten Teil 4 verriegelt. In dieser Stellung kann der Be- oder Entladevorgang stattfinden, wobei sich der Rammpuffer nicht störend hierauf auswirkt.

## Patentansprüche

1. Rammpuffer (1) zur Anbringung an Verladerampen, Überladebrücken u. dgl. mit den folgenden Bestandteilen:
a. einem ersten im Querschnitt C-profilförmigen, vertikal erstreckten Teil (4) aus hartem stoßfesten Material, insbesondere Stahl;
b. einem zweiten im Querschnitt hutprofilförmigen, vertikal erstreckten Teil (5) aus hartem stoßfestem Material, insbesondere Stahl, dessen Seitenflansche (11) im ersten Teil (4) benachbart zu dessen Seitenflanschen (10) angeordnet sind und dessen Stege (13) sich aus dem ersten Teil (4) heraus erstrecken; und
c. einem innerhalb des ersten und zweiten Teiles (4, 5) angeordneten Kern (6, 14) aus elastisch verformbarem Dämpfungsmaterial, insbesondere Gummi;
wobei entweder das erste (4) oder das zweite Teil (5) stationär anordbar und das andere die Stoßbelastung aufnehmende Teil (4, 5) relativ zum stationär anordbaren Teil (4, 5) in Stegrichtung beweglich ist, **dadurch gekennzeichnet, dass** das andere die Stoßbelastung aufnehmende Teil (4, 5) relativ zum stationär anordbaren Teil (4, 5) auf- und abbeweglich angeordnet ist.

2. Rammpuffer nach Anspruch 1, **dadurch gekennzeichnet, daß** der Kern aus zwei voneinander getrennten Elementen (6, 14) besteht, von denen eines (6) das erste Teil (4) und das andere (14) das zweite Teil (5) im wesentlichen ausfüllt.

3. Rammpuffer nach Anspruch 1 oder 2, **dadurch gekennzeichnet, daß** das zweite hutprofilförmige Teil (5) eine sich über das erste C-profilförmige Teil (4) erstreckende Deckplatte (7) aufweist.

4. Rammpuffer nach Anspruch 3, **dadurch gekennzeichnet, daß** sich die Deckplatte mit seitlichen Abstützungen schräg aufwärts erstreckt.

5. Rammpuffer nach einem der vorangehenden Ansprüche, **dadurch gekennzeichnet, daß** das C-profilförmige erste Teil (4) mit Befestigungsmitteln versehen ist.

6. Rammpuffer nach einem der vorangehenden Ansprüche, **dadurch gekennzeichnet, daß** das C-profilförmige erste Teil (4) am unteren Ende geschlossen ist.

7. Rammpuffer nach Anspruch 2, **dadurch gekennzeichnet, daß** sich das im zweiten Teil (5) angeordnete Dämpfungselement (14) etwas in das erste Teil (4) hinein erstreckt.

8. Rammpuffer nach einem der vorangehenden Ansprüche, **dadurch gekennzeichnet, daß** er auf der Rückseite des ersten Teiles (4) mindestens einen Stützsteg (17) und insbesondere eine mit diesem verbundene Horizontalplatte (18) zur Anbringung auf der Oberseite (2) einer Rampe u.dgl. aufweist.

9. Rammpuffer nach einem der varangehenden Ansprüche, **dadurch gekennzeichnet, daß** er eine das zweite hutprofilförmige Teil (5) aus dem ersten C-profilförmigen Teil (4) eine vorgegebene Strecke nach oben herausdrückende elastische Einrichtung aufweist.

10. Rammpuffer nach Anspruch 9, **dadurch gekennzeichnet, daß** die elastische Einrichtung eine Gasfeder (22) ist.

11. Rammpuffer nach Anspruch 9 oder 10, **dadurch gekennzeichnet, daß** er eine das zweite hutprofilförmige Teil (5) in dessen Ausgangsstellung innerhalb des ersten C-profilförmigen Teiles (4) fixierende lösbare Verriegelungseinrichtung (23) aufweist.

## Claims

1. A shock buffer for mounting the same at loading ramps, loading bridges etc. comprising the following components:
a. a first vertically extended member (4) of hard shock-proof material, especially steel, having a C-profile-like cross-section;
b. a second vertically extended member (5) of hard shock-proof material, especially steel, having a hat-profile-like cross-section and disposed with its side flanges (11) in the first member (4) adjacent to the side flanges (10) thereof, wherein the webs (13) of the second member extend outwardly from the first member (4); and
c. a core (6, 14) of resiliently deformable damping material, especially rubber, disposed within the first and second member (4, 5);
wherein either the first (4) or the second member (5) is stationarily disposable and the other member (4, 5) taking up the shock load is movable relative to the stationarily disposable member (4, 5) in web direction, **characterized in that** the other member (4, 5) taking up the shock load is disposed movably up and down with respect to the stationarily disposable member (4, 5).

2. The shock buffer according to claim 1, **characterized in that** the core consists of two elements (6, 14) separated from one another of which one (6) substantially fills the first member (4) and the other (14) substantially fills the second member (5).

3. The shock buffer according to claim 1 or 2, **characterized in that** the second hat-profile-like member (5) includes a cover plate (7) extending over the first C-profile-like member (4).

4. The shock buffer according to claim 3, **characterized in that** the cover plate extends upwardly in an inclined manner with lateral support elements.

5. The shock buffer according to one of the preceding claims, **characterized in that** the C-profile-like first member (4) is provided with fastening means.

6. The shock buffer according to one of the preceding claims, **characterized in that** the C-profile-like first member (4) is closed at the lower end.

7. The shock buffer according to claim 3, **characterized in that** the damping element (14) disposed within the second member (5) extends slightly into the first member (4).

8. The shock buffer according to one of the preceding claims, **characterized in that** it includes at least one support web (17) on the back side of the first member (4) and especially a horizontal plate (18) connected therewith for mounting the same at the upper side (2) of a ramp etc.

9. The shock buffer according to one of the preceding claims, **characterized in that** it includes a resilient device pushing the second hat-profile-like member (5) out of the first C-profile-like member (4) over a predetermined distance upwardly.

10. The shock buffer according to claim 9, **characterized in that** the resilient device is a gas spring (22).

11. The shock buffer according to claim 9 or 10, **characterized in that** it includes a removable locking device (23) fixing the second hat-profile-like member (5) in its original position within the first C-profile-like member (4).

## Revendications

1. Tampon de choc (1) à appliquer sur des rampes de chargement, des ponts de transbordement et similaire comprenant les éléments constitutifs suivants :
a. une première partie (4) verticalement allongée, à section transversale en forme de profilé en C, en matériau dur résistant aux chocs, en particulier en acier,
b. une deuxième partie (5) verticalement allongée, à section transversale en forme de profilé chapeau, en matériau dur résistant aux chocs, en particulier en acier, dont les ailes latérales (11) sont disposées dans la première partie (4) à côté des ailes latérales (10) de celle-ci et dont les âmes (13) s'étendent en dehors de la première partie (4), et
c. un noyau (6, 14) disposé à l'intérieur de la première et de la deuxième partie (4, 5), en matériau d'amortissement déformable, en particulier en caoutchouc,
dans lequel soit la première (4) soit la deuxième partie (5) peut être disposée de manière stationnaire et l'autre partie (4, 5) exposée aux chocs peut être mue en direction de l'âme par rapport à la partie (4, 5) pouvant être disposée de manière stationnaire,
**caractérisé en ce que** l'autre partie (4, 5) exposée aux chocs est disposée de manière faire un mouvement vers le haut et vers le bas par rapport à la partie (4, 5) pouvant être disposée de manière stationnaire.

2. Tampon de choc selon la revendication 1, **caractérisé en ce que** le noyau est constitué de deux éléments (6, 14) séparés l'un de l'autre dont l'un (6) rempli essentiellement la première partie (4) et l'autre (14) remplit essentiellement la deuxième partie (5).

3. Tampon de choc selon la revendication 1 ou 2, **caractérisé en ce que** la deuxième partie (5) en forme de profilé chapeau présente une plaque de couverture (7) s'étendant au-dessus de la première partie (4) en forme de profilé en C.

4. Tampon de choc selon la revendication 3, **caractérisé en ce que** la plaque de couverture s'étend avec des supports latéraux en oblique vers le haut.

5. Tampon de choc selon une quelconque des revendications précédentes, **caractérisé en ce que** la première partie (4) en forme de profilé en C est pourvue de moyens de fixation.

6. Tampon de choc selon une quelconque des revendications précédentes, **caractérisé en ce que** la première partie (4) en forme de profilé en C est fermée à l'extrémité inférieure.

7. Tampon de choc selon la revendication 2, **caractérisé en ce que** l'élément d'amortissement (14) disposé dans la deuxième partie (5) s'étend quelque peu à l'intérieur de la première partie (4).

8. Tampon de choc selon une quelconque des revendications précédentes, **caractérisé en ce qu'**il présente, sur le côté arrière de la première partie (4), au moins un étai d'appui (17) et en particulier une plaque horizontale (18) reliée à celui-ci à placer sur le côté supérieur (2) d'une rampe ou similaire.

9. Tampon de choc selon une quelconque des revendications précédentes, **caractérisé en ce qu'**il présente un dispositif élastique poussant vers le haut la deuxième partie (5) en forme de profilé chapeau hors de la première partie (4) en forme de profilé en C sur une distance prédéfinie.

10. Tampon de choc selon la revendication 9, **caractérisé en ce que** le dispositif élastique est un ressort à gaz (22).

11. Tampon de choc selon la revendication 9 ou 10, **caractérisé en ce qu'**il présente un dispositif de verrouillage (23) détachable fixant la deuxième partie (5) en forme de profilé chapeau dans sa position de départ à l'intérieur de la première partie (4) en forme de profilé en C.
